# EUROPÄISCHE PATENTANMELDUNG

(11) **EP 3 879 129 A1**
(43) Veröffentlichungstag der Anmeldung: **15.09.2021**
(21) Anmeldenummer: 21152991.2
(22) Anmeldetag: 22.01.2021
(51) Int. Cl.: F16B 23/00, B60T 11/30, F16B 33/00

(54) **KUNSTSTOFFSCHRAUBE**

(30) Priorität: 24.01.2020 DE 102020101765
(71) Anmelder: RG Prototypenbau UG, 72218 Wildberg-Gültlingen (DE)
(72) Erfinder: Rafael, Gierlatta, 72218 Wildberg-Gültlingen (DE)
(74) Vertreter: Limbeck, Achim

(57) **Zusammenfassung**

Die vorliegende Erfindung betrifft eine Kunststoffschraube (1), dessen Schraubenkopf (111) erfindungsgemäß eine nach innen gerichtete, zylinderförmige Aussparung (1110) umfasst, die zur form- und/oder kraftschlüssigen Aufnahme eines entsprechend korrespondierenden, zylindrischen Formteils (1111) ausgebildet ist, wobei das Formteil (1111) vorzugsweise eine Aufnahme (11110) für ein Werkzeug zum Ein- und Ausdrehen der Kunststoffschraube (1) aufweist. In einer weiteren vorteilhaften Ausführungsform mündet das Formteil (1111) in ein hohlkörperartiges Flüssigkeits- und Luftreservoir (1112) für eine Bremsflüssigkeit und Luft, in dem aufsteigende Luft gesammelt wird.

## Beschreibung

### Technisches Gebiet

Die vorliegende Erfindung betrifft eine Kunststoffschraube gemäß dem Oberbegriff des Patentanspruchs 1. Ferner betrifft die vorliegende Erfindung eine Schraube in Form einer Entlüftungsschraube.

### Stand der Technik

Es sind aus dem Stand der Technik bereits Kunststoffschrauben bekannt, welche vorwiegend aus Nylon (PA), aus Thermoplast oder anderen Materialien oder Materialkombinationen gebildet sind und die in unterschiedlichsten Bereichen wie bspw. im Bereich des Leichtbaus Anwendung finden. Kunststoffschrauben haben gegenüber Schrauben aus Metall teils unterschiedliche Vorteile, die sich aber in erster Linie auf ihr geringeres Gewicht sowie ihre Korrosionsbeständigkeit beziehen, wodurch auch auf eine zusätzliche Oberflächenbehandlung verzichtet werden kann.

Es sind aus dem Stand der Technik ferner Entlüftungsschrauben bekannt, die in Form eines manuell betätigten, schraubförmigen Ventils ausgebildet sind, das den Austritt von Gasen und Flüssigkeiten ermöglicht, um Luft und/oder Flüssigkeit aus hydraulischen Systemen abzulassen, wobei die Entlüftungsschraube einen Schraubenkopf umfasst und aus einem zumindest bereichsweise kegelförmigen Kunststoffprofil mit einem Außengewinde gebildet ist. Derartige Entlüftungsschrauben finden bspw. Verwendung bei der Entlüftung von hydraulischen Scheibenbremsen am Bremsgriff.

Nachteilig ist allerdings, dass Kunststoffschrauben sowie Entlüftungsschrauben aus Kunststoff eine stoffgleich ausgebildete Aufnahme umfassen, mittels der die Kunststoffschrauben bspw. mit einem Sechskantschlüssel ein- und ausgedreht werden. Dabei kann es materialbedingt zu einem Verschleiß kommen.

### Darstellung der Erfindung

Der vorliegenden Erfindung liegt die Aufgabe zugrunde, die vorgenannten Nachteile auszuräumen und eine Kunststoffschraube zu schaffen, die verschleißarm gebaut und lange haltbar ist.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Kunststoffschraube sind in den abhängigen Unteransprüchen angegeben.

Erfindungsgemäß ist eine Kunststoffschraube der eingangs genannten Art dadurch gekennzeichnet, dass der Schraubenkopf eine nach innen gerichtete, zylinderförmige Aussparung umfasst, die zur formschlüssigen Aufnahme eines entsprechend korrespondierenden, zylindrischen Formteils ausgebildet ist, welche vorzugsweise aus Metal oder einem Hartkunststoff gebildet ist.

### Kurzbeschreibung der Zeichnungen

Weitere Ziele, Merkmale, Vorteile und Anwendungsmöglichkeiten der erfindungsgemäßen Kunststoffschraube ergeben sich aus der nachfolgenden Beschreibung eines Ausführungsbeispiels anhand der Zeichnungen.

In den Zeichnungen zeigen
Fig. 1 die erfindungsgemäße Kunststoffschraube in Form einer Entlüftungsschraube in perspektivischer Ansicht mit Formteil;

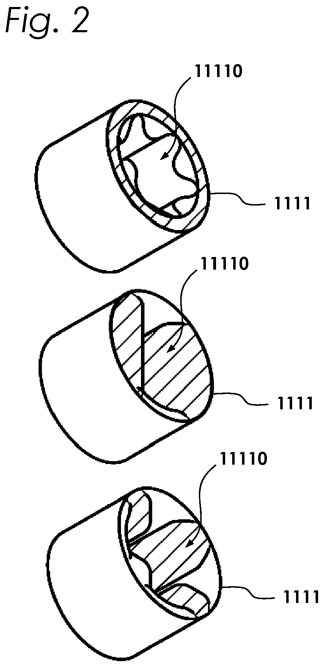

Fig. 2 das Formteil in unterschiedlichen Ausführungsformen in perspektivischer Ansicht;
Fig. 3 einer weiteren Ausführungsform der Kunststoffschraube in der Frontansicht.

### Ausführung der Erfindung

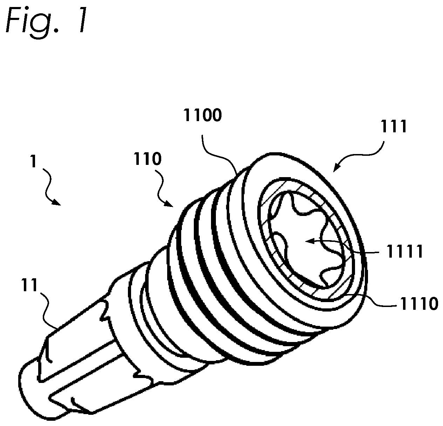

Wie aus Fig. 1 ersichtlich, besteht die erfindungsgemäße Kunststoffschraube 1 zunächst aus einem Kunststoffprofil 11 mit einem Außengewinde 110 und einem endseitigen Schraubenkopf 111, wobei das Formteil vorzugsweise eine Aufnahme 11110 für ein Werkzeug zum Ein- und Ausdrehen der Kunststoffschraube aufweist.

In einer besonders bevorzugten Ausführungsform der Erfindung ist die Kunststoffschraube 1 vorzugsweise in Form eines manuell betätigten, schraubförmigen Ventils ausgebildet, das den Austritt von Gasen und Flüssigkeiten ermöglicht, um Luft und/oder Flüssigkeit aus hydraulischen Systemen abzulassen, wobei die Entlüftungsschraube 1 aus einem Kunststoffprofil 11 mit einem Außengewinde 110 mit mindestens zwei am endseitigen Schraubenkopf 111 konisch ausgebildeten Windungen (1100) und einem endseitigen Schraubenkopf 111 gebildet ist. Das kegelförmige Kunststoffprofil 11 ist dabei vorteilhafterweise zur Bildung eines Verschlusses oder zur Optimierung der Dichtigkeit gegenüber Gasen und Flüssigkeiten gebildet.

Dabei umfasst der Schraubenkopf 111 vorzugsweise eine nach innen gerichtete, zylinderförmige Aussparung 1110, die zur form- und/oder kraftschlüssigen Aufnahme eines entsprechend korrespondierenden, zylindrischen Formteils 1111 ausgebildet ist, wobei das Formteil 1111 eine Aufnahme 11110 für ein Werkzeug zum Ein- und Ausdrehen der Entlüftungsschraube 1 aufweist, welches vorliegend bevorzugt ein Torx-Sechskantschlüssel ist.

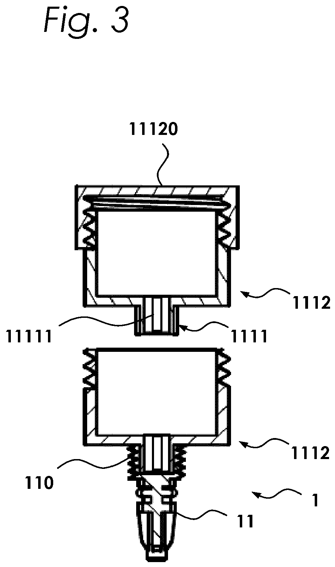

Wie aus Fig. 3 ersichtlich, kann das Formteil 1111 weiterhin in ein hohlkörperartiges (oder aufnahmeartiges, bspw. hohlzylindrisches) Flüssigkeits- und Luftreservoir 1112 für eine Bremsflüssigkeit und Luft münden, welches seinerseits ein Deckelteil 11120 umfasst. Im oberen Bereich des Flüssigkeits- und Luftreservoirs 1112 sammelt sich Luft aus dem Bremssystem, welches vorzugsweise durch mindestens eine in dem Formteil 1111 vorgesehene rohrförmige Durchlassöffnung 11111 gelangt und im Flüssigkeits- und Luftreservoirs 1112 gesammelt wird. In einer vorteilhaften Ausführungsform dieser Variante kann das Deckelteil 1112 ein Innen- oder Außengewinde umfassen, welches auf ein Außen- oder in ein Innengewinde an dem Flüssigkeits- und Luftreservoir 1112 auf- oder einschraubbar ist. Das Deckelteil 1112 kann aber ansonsten auch auf andere denkbare Weise form- und/oder kraftschlüssig (wie bspw. mittels Kleben / thermischen Direktfügen, etc.) auf das Flüssigkeits- und Luftreservoirs 1112 auf- oder eingebracht werden. Der Vorteil des Flüssigkeitsreseevoirs besteht vornehmlich darin, dass das Entlüften des Bremssystems bspw. bei Fahrrädern nicht mehr benötigt wird oder auf ein Minimum gesenkt wird.

Das innenliegende Formteil 1111 kann auf unterschiedlichste Art und Weise in der Aussparung 1110 fixiert werden wie bspw. durch Kleben, thermisches Direktfügen, Kraftschluss, etc. Ebenso können in der Aussparung 1110 und an dem Formteil 1111 entsprechend korrespondierende Ausbuchtungen/Einbuchtungen vorgesehen sein, die ein Verdrehen des Formteils 1111 innerhalb der Aussparung 1110 verhindern.

Der Vorteil der erfindungsgemäßen Kunststoffschraube 1 ist vornehmlich darin zu sehen, dass sie durch die vorzugsweise innenliegende metallische Aufnahme 11110 für ein Werkzeug besonders verschleißarm und nicht anfällig im Hinblick auf Beschädigungen ist.

### Liste der Bezugsziffern

- 1: Kunststoffschraube in Form einer Entlüftungsschraube
- 11: Kunststoffprofil
- 110: Außengewinde am Kunststoffprofil
- 111: Schraubenkopf
- 1100: konisch ausgebildete Windungen
- 1110: Aussparung am Kunststoffprofil
- 1111: Formteil
- 1112: Flüssigkeits- und Luftreservoir
- 11110: Werkzeug-Aufnahme im Formteil
- 11111: Durchlassöffnung am Formteil
- 11120: Deckelteil am Flüssigkeits- und Luftreservoir

## Patentansprüche

1. Kunststoffschraube (1), bestehend aus einem Kunststoffprofil (11) mit einem Außengewinde (110) und einem endseitigen Schraubenkopf (111),
**dadurch gekennzeichnet, dass**
der Schraubenkopf (111) eine nach innen gerichtete, zylinderförmige Aussparung (1110) umfasst, die zur form- und/oder kraftschlüssigen Aufnahme eines entsprechend korrespondierenden, zylindrischen Formteils (1111) ausgebildet ist.

2. Kunststoffschraube (1) nach Anspruch 1,
**dadurch gekennzeichnet, dass**
das Formteil (1111) eine Aufnahme (11110) für ein Werkzeug zum Ein- und Ausdrehen der Kunststoffschraube (1) aufweist.

3. Kunststoffschraube (1) nach Anspruch 1,
**dadurch gekennzeichnet, dass**
das Formteil (1111) in ein hohlkörperartiges Flüssigkeits- und Luftreservoir (1112) für eine Bremsflüssigkeit und Luft mündet.

4. Kunststoffschraube (1) nach Anspruch 3,
**dadurch gekennzeichnet, dass**
das Flüssigkeits- und Luftreservoir (1112) ein Deckelteil (11120) umfasst.

5. Kunststoffschraube (1) nach Anspruch 3 oder 4,
**dadurch gekennzeichnet, dass**
in dem Formteil (1111) mindestens eine rohrförmige Durchlassöffnung (11111) für eine Flüssigkeit oder Luft ausgebildet ist.

6. Kunststoffschraube (1) nach einem der vorangegangenen Ansprüche,
**dadurch gekennzeichnet, dass**
das Formteil (1111) in der Aussparung (1110) mittels Kleben, thermischen Direktfügen, Kraftschluss und/oder andere geeignete Verfahren oder Mittel fixiert ist.

7. Kunststoffschraube (1) nach einem der vorangegangenen Ansprüche,
**dadurch gekennzeichnet, dass**
in der Aussparung (1110) und an dem Formteil (1111) entsprechend korrespondierende Ausbuchtungen/Einbuchtungen vorgesehen sind, die ein Verdrehen des Formteils (1111) innerhalb der Aussparung (1110) verhindern.

8. Kunststoffschraube (1) nach einem der vorangegangenen Ansprüche,
**dadurch gekennzeichnet, dass**
sie in Form eines manuell betätigten, schraubförmigen Ventils ausgebildet ist, das den Austritt von Gasen und Flüssigkeiten ermöglicht, um Luft und/oder Flüssigkeit aus hydraulischen Systemen abzulassen.

9. Kunststoffschraube (1) nach einem der vorangegangenen Ansprüche,
**dadurch gekennzeichnet, dass**
im Bereich des endseitigen Schraubenkopfes (111) vorgesehene Windungen (1100) des Außengewindes (110) konisch ausgebildet sind.

10. Kunststoffschraube (1) nach einem der vorangegangenen Ansprüche,
**dadurch gekennzeichnet, dass**
das Außengewinde(110) zur Bildung eines Verschlusses oder zur Optimierung der Dichtigkeit gegenüber Gasen und Flüssigkeiten gebildet ist.
